# EUROPEAN PATENT SPECIFICATION

(11) **EP 2 692 223 B1**
(45) Date of publication and mention of the grant of the patent: **15.06.2016**
(21) Application number: 13177732.8
(22) Date of filing: 24.07.2013
(51) Int. Cl.: A01D 43/063, A01D 34/71, A01D 34/82

(54) **Lawn mower provided with a lower protection to improve grass clippings evacuation efficiency**
Rasenmäher mit einem unteren Schutz zur Verbesserung der Auswurfeffizienz des Rasenschnittguts
Tondeuse à gazon pourvue d'une protection inférieure afin d'améliorer l'efficacité de l'évacuation des tontes de gazon

(30) Priority: 02.08.2012 IT MI20120292 U
(43) Date of publication of application: 05.02.2014
(73) Proprietor: GGP Italy S.p.A., 31033 Castelfranco Veneto (TV) (IT)
(72) Inventor: D'Agostini, Mauro, 35018 San Martino di Lupari (PD) (IT)
(74) Representative: Mittler, Enrico

(56) References cited:
- EP-A1- 1 637 027
- US-A- 2 675 662
- US-A- 4 083 166
- US-A- 4 161 096
- US-A- 5 884 463
- US-A1- 2002 152 736

## Description

The present invention relates to a lawn mower provided with a lower protection for improving grass clippings evacuation efficiency.

More in particular, the invention relates to a protective flange applied to a load-bearing body of the lawn mower, near the rotating blade, fitting a post-compression blade, so as to allow the formation of an air flow needed to draw the grass clippings into the bag arranged at the back of the lawn mower.

A lawn mower provided with bag for collecting the grass clippings is known in the prior art, in which the load-bearing body is configured to form an air circulation path inside by connecting a first air passage, laying on a cutting plane occupied by the rotating blade, to an inlet section of the bag for collecting the cut glass, and by connecting an inlet of the bag itself to a second air passage, laying on said cutting plane.

The prior art additionally associates said first air passage to a toroidal shape channel in which the cutting plane occupied by the peripheral portion of the rotating blade lays, said second passage occupying a peripheral compartment above the cutting plane itself.

It is indeed known from patent EP1300063 an air circulation system of a lawn mower comprising a toroidal channel and a flange provided with slots, each connected to a bag for collecting the grass clippings. Both the toroidal channel and the flange provided with slots lay near a cutting plane occupied by a rotating blade and develop on the vertical protection of the peripheral portion of the rotating blade. Document US4083166A discloses the preamble of claim 1.

A know problem induced by an air circulation system applied to a lawn mower provided with rotating blade concerns the capacity of reaching a given pressure difference value between the toroidal channel and the bag for containing the grass clippings (corresponding to the first segment of the air circulation system which draws the grass clippings) and between the bag itself and the flange provided with slots (corresponding to the second segment of the air circulation system after the air has let the amount of grass clippings fall into the bag).

The pressure difference in an air circulation system applied to a lawn mower provided with a rotating blade cannot be high to prevent excessive vibrations and noise or lifting dust.

At the same time, the pressure difference cannot be low to guarantee the drawing of the grass clippings into the bag and avoid the obstruction of the channels along the path.

Given the prior art, it is the object of the present invention to make a lawn mower provided with a flange provided with slots, in a position above the cutting plane and connected, by means of a channel, to the outlet edge of the bag to contain the grass clippings, with slots shaped to improve the evacuation of the grass clippings while maintaining a high comfort of use of the lawn mower by the user.

In accordance with the invention, such an object is reached by a lawn mower according to claim 1.

These and other features of the present invention will be further apparent from the following detailed description of an example of embodiment thereof, shown by way of non-limitative example in the accompanying drawings, in which:
Figure 1 shows a bottom axonometric view of a lawn mower according to the present invention;
Figure 2 shows a bottom plan view of the lawn mower in figure 1;
Figure 3 shows a partially sectioned side view of the lawn mower taken along the line III-III in Figure 2;
Figure 4 shows an enlarged detail A of the partial section of the lawn mower in Figure 3;
Figure 5 shows a partially sectioned front view of the lawn mower taken along the line V-V in Figure 2;
Figure 6 shows an enlarged detail B of the partial section of the lawn mower in Figure 5;
Figure 7 shows a bottom axonometric view of the lawn mower with a post-compression blade;
Figure 8 shows a bottom plan view of the lawn mower in figure 7;
Figure 9 shows a section taken along line IX-IX in figure 8;
Figure 10 shows an enlarged detail C of Figure 9;
Figure 11 shows a side view of the post-compression blade;
Figure 12 shows a top plan view of the post-compression blade.

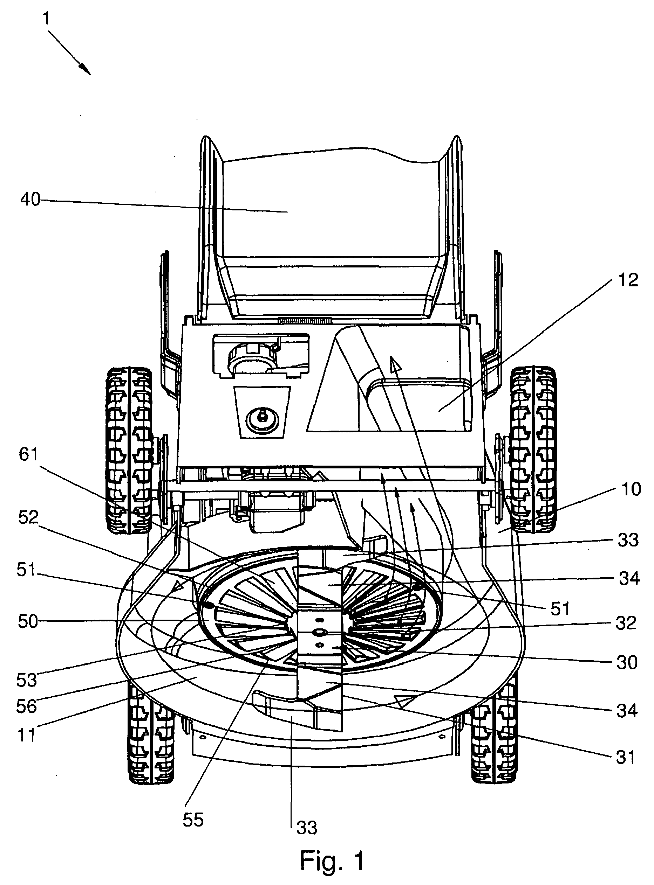

With particular reference to Figures 1-3, a lawn mower 1 comprising a load-bearing body 10 supported by two rear wheels and two front wheels, a motor 20 supported by the load-bearing body 10, a vertical axis cutting blade 30 connected to the motor 20, a bag 40 to contain the grass clippings applied to the back of the load-bearing body 10.

The vertical axis cutting blade 30 is formed by a central foil 31 centered on a hub 32, coaxial to the motor 20 according to a vertical rotation axis W. The foil 31 is arranged for the entire direction of its length according to an axis S co-rotating together the blade 30 itself.

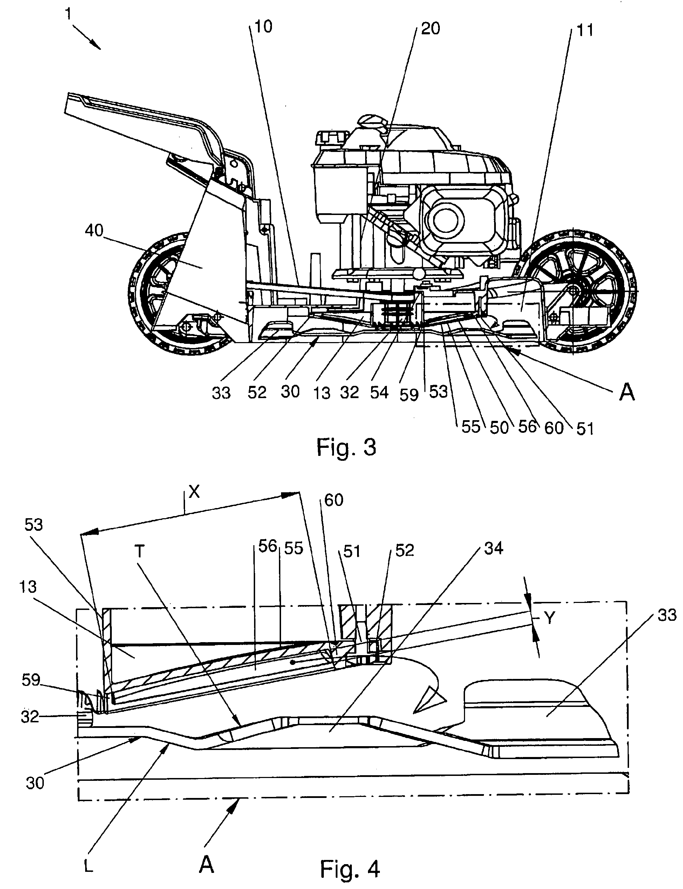

As shown in Figure 4, the foil 31 is shaped so as to comprise a pair of peripheral fins 33 folded upwards and projecting in direction contrary to the sense of rotation. The central portion of the foil 31 is a flat surface at the rotation axis; the intermediate portion of the foil 31, comprised between the central portion and the peripheral portion, forms a flap 34 which increases in the sense of rotation.

With reference to Figure 4, the cutting blade 30 thus shaped, by effect of the interaction with the air during rotation with respect to the axis of the hub 32, causes a distribution of the pressure along the profile of the foil 31 so that: an overpressure (higher than atmospheric pressure) is formed in the upper pitch T of the peripheral portion of the blade and a vacuum (lower than atmospheric pressure) is formed in the blade portion comprised between the central portion and the peripheral portion; a vacuum is formed in the lower pitch L of the peripheral portion of the blade and an overpressure is formed in the blade portion comprised between the central portion and the peripheral portion.

The load-bearing body 10 internally forms a circular toroidal shaped channel 11 (Figure 1) connected to a rectilinear channel 12 departing tangentially from the toroidal channel 11 to lead towards the bag 40.

The walls of the body 10, constituting the channels 11 and 12, are tapered and smooth so as to minimize the friction of the air flow and not to hinder the movement of the grass clippings drawn by the air flow along the channels 11 and 12.

The bag 40 comprises a permeable partition wall provided with a first air passage (not shown) and a second passage to allow the transit of return air (not shown). These two passages are arranged in two portions of the walls of the bag 40 to allow the grass clippings itself to fall onto the bottom of the bag itself and to evacuate the residual air towards the external environment along a connection channel between the bag 40 and a central chamber 13 above the cutting blade 30.

A flange 50 separates the central chamber 13 of the lawn mower from the cutting blade 30.

The flange 50 is a circular diaphragm fixed to the load-bearing body 10 by means of two screws 51, delimited on the periphery by a circular edge 52 and in the middle by a cylinder 53 pierced at the base by a circular hole 54 which crosses the hub 32 belonging to the cutting blade 30.

With reference to Figures 3 and 4, the flange 50 includes a tapered circular wall 55 delimited on the periphery of the circular edge 52 and towards the centre of the cylinder 53. According to a preferred embodiment of the invention, the tapered circular wall 55 is inclined by an angle of approximately 11 ° with respect to a horizontal cutting plane V of the lawn mower 1.

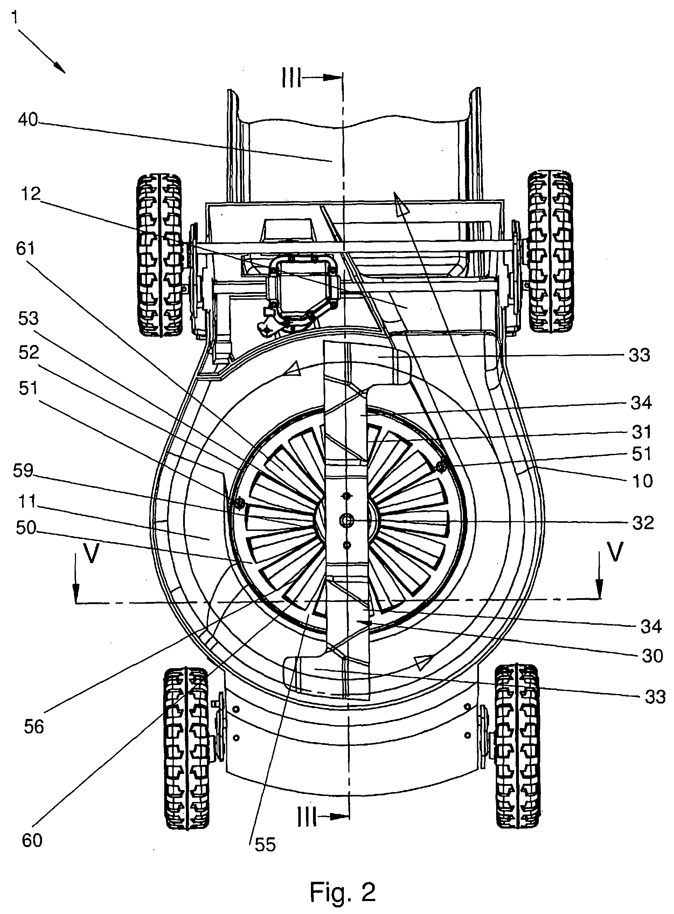

The flange 50 is provided with a series of radial curved profiles or fins 61 adapted to define a series of radial vents 56. Said fins 61 and said vents 56 are equally distributed along the tapered circular wall 55 about the central rotation axis of the cutting blade 30 (Figure 2).

With reference to Figure 4, each radial vent 56 is shaped as a rectangle with base X and height Y, laying on a radial plane intersecting the rotation axis W of the cutting blade 30, said rectangular being inclined by the same inclination angle as the tapered circular wall 55.

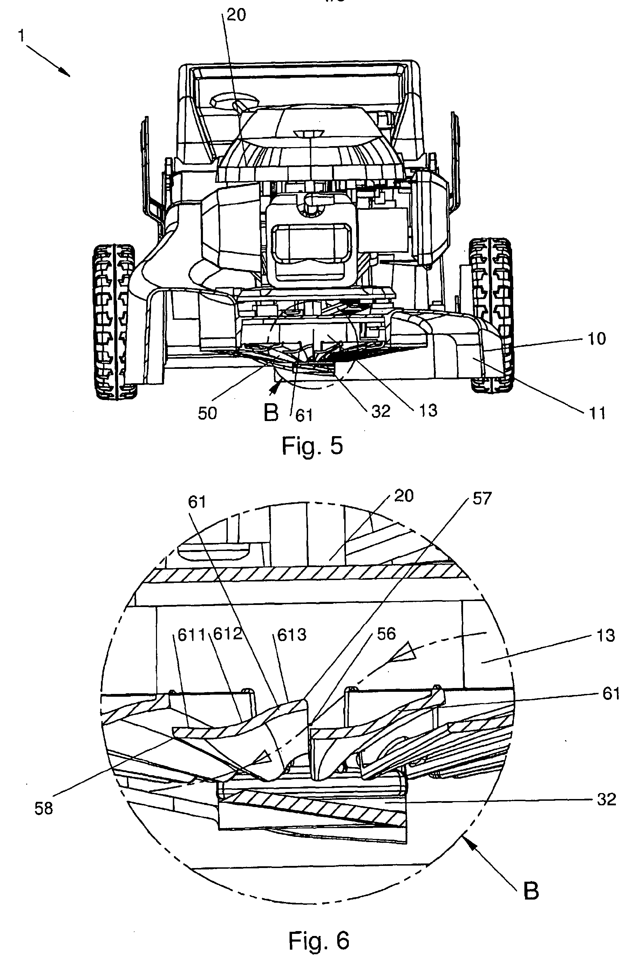

With reference to Figure 6, each fin 61 has a radial upper edge 57, a radial lower edge 58 lowered by Y corresponding to the height of the radial vent 56, a side 59, corresponding to a downward projection of the wall of the central cylinder 53, and a side 60, near the peripheral circular edge 52 and parallel to the wall of the central cylinder 53.

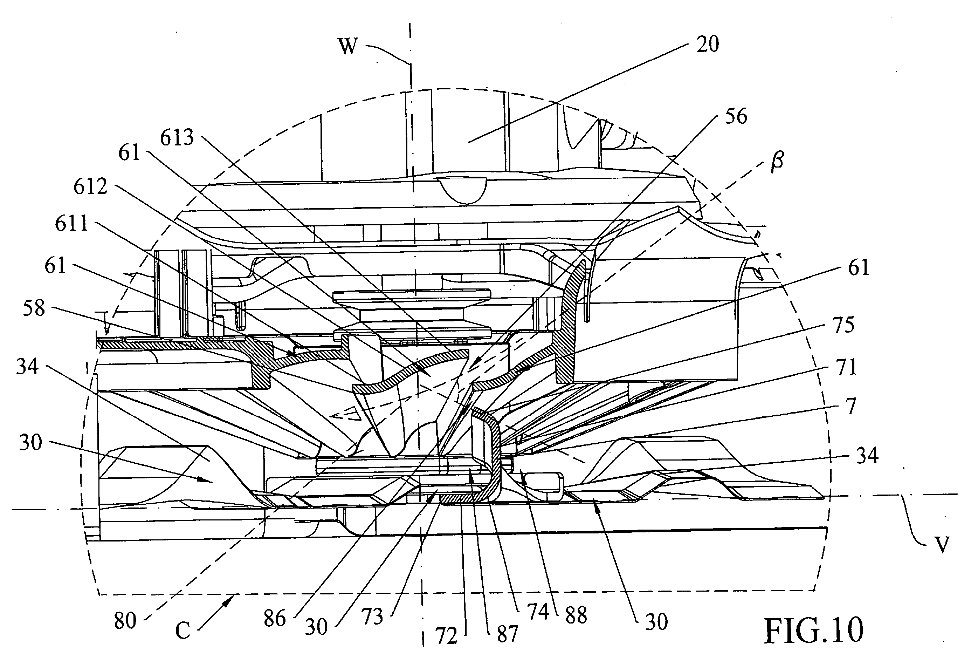

With reference to Figures 5-6, 10, each fin 61 forms an S-shaped wing profile delimited by edges 57 and 58 facing the central chamber 13 and the cutting plane V of the blade 30, respectively. More in detail, said S-shaped fin 61 has an upward concave portion 611 connected by means of an inflection portion 612 to an upward convex portion 613. The convex portion 613 is placed in a position higher than the concave portion 611, and faces the sense opposite to the sense of rotation of the blade 30 so that the air may move along a path 80 from the chamber 13 towards the cutting plane V of the blade 30, as shown in Figures 6, 10.

The fins 61 are arranged over the two flaps 34 of the blade 30 and cooperate with them during the rotation of the blade 30, creating the necessary swirling air motion and re-establishing the optimal pressure difference conditions in the air circulation system of the lawn mower 1.

The present invention solves the objective of optimizing the fluid-dynamic efficiency of the air circulation system in the lawn mower 1.

In particular, the geometric shape of the flange 50 is such that the fins 61 cover the intermediate part of the blade 30 provided with the flaps 34. In essence, the flaps 34 during the rotation of the blade describe a circular portion which remains in correspondence with and under said fins 61 and thus under the vents 56.

The flange 50 provided with fins 61 allows to optimize the pressure difference value needed to make the air circulate along channels 11 and 12 to the bag 40 and along the channel which connects the bag 40 to the central annular chamber 13 allowing the ejection of air from the radial vents 56.

The flange 50 shaped so as to cover the intermediate portion provided with the flaps 34 of the cutting blade 30, reduce the emission of noise and vibrations and the emission of dust, ensuring cleanness is maintained along the pipes 11 and 12 crossed by the grass clippings at the same time.

The flange 50, shaped with the central perforated cylinder 53, helps to protect the rotating portions keyed on the hub 32 of the cutting blade 30 from dust and grass clippings.

It is finally possible to diversify the size of the fins 61 by making different interchangeable flanges 50 in order to obtain different differential pressure values along the path of the air circulation system of the lawn mower 1, diversifying the operating ratios of the system itself according to particular needs related to the grass clippings type (specific weight, rate of humidity etc.).

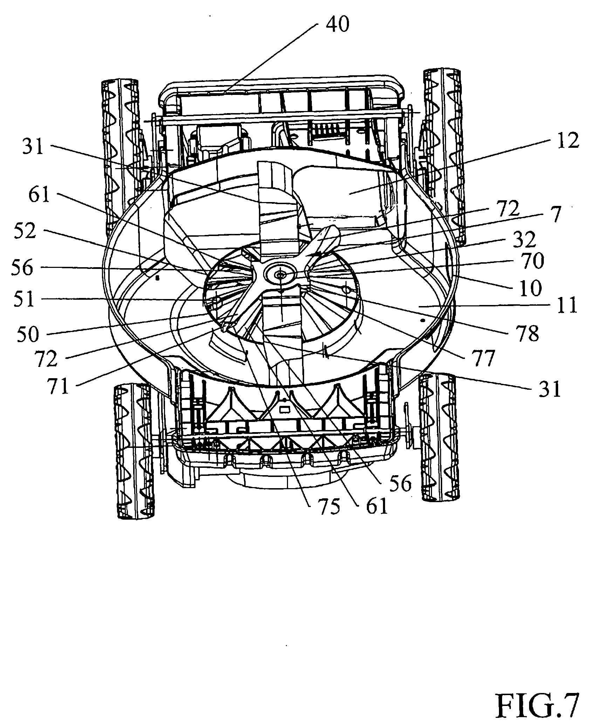

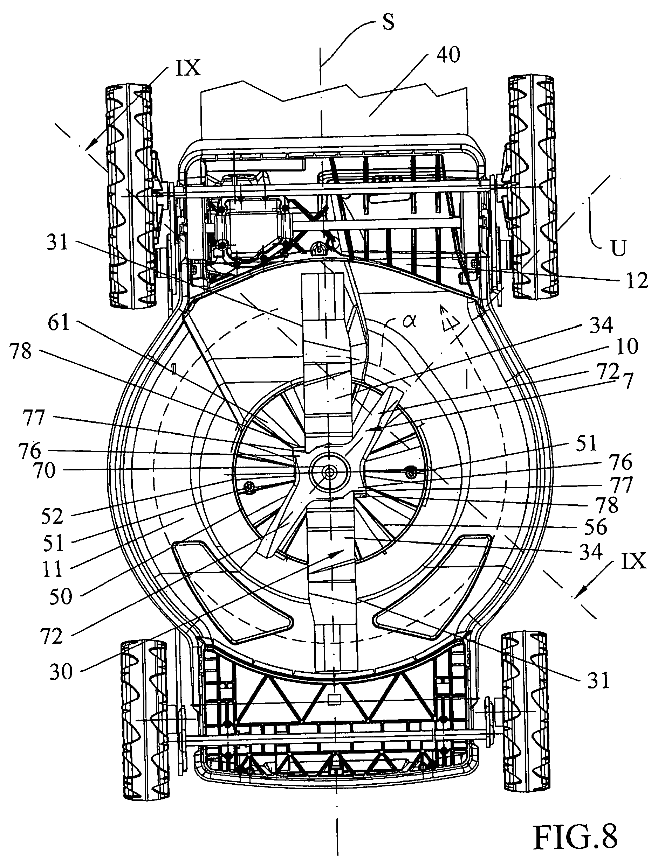

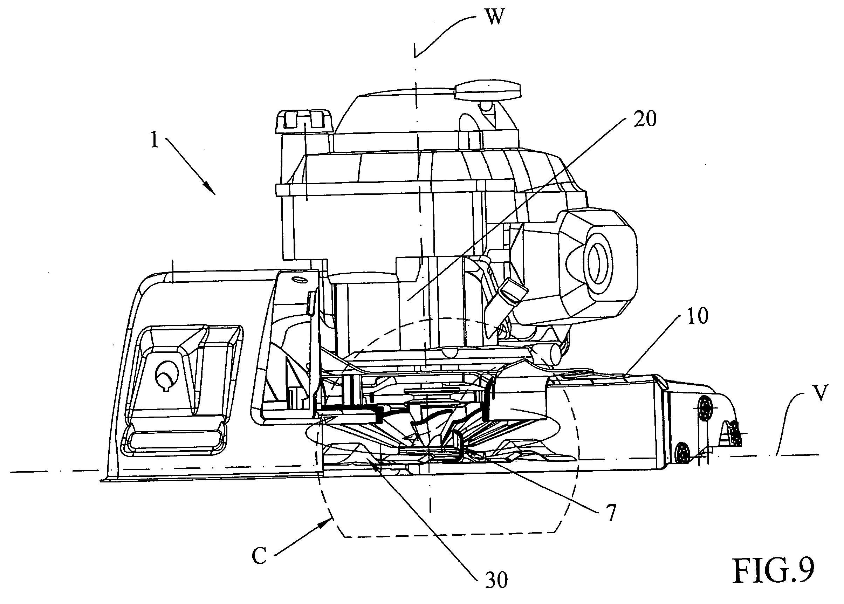

An air post-compressor blade 7 as shown in Figures 7-12 is provided in order to optimize the fluid-dynamic efficiency of the air circulation system in the lawn mower 1 further and to reduce the vibrations, noise and lifting dust further.

Said post-compression blade 7 is fitted integrally to the blade 30 on the same vertical rotation axis W so as to be able to revolve integrally with the blade 30 while cutting the grass.

The post-compression blade 7 is fixed under the blade 30 so that the base of the post-compression blade 7 lays on the same cutting plane V as the blade 30 itself.

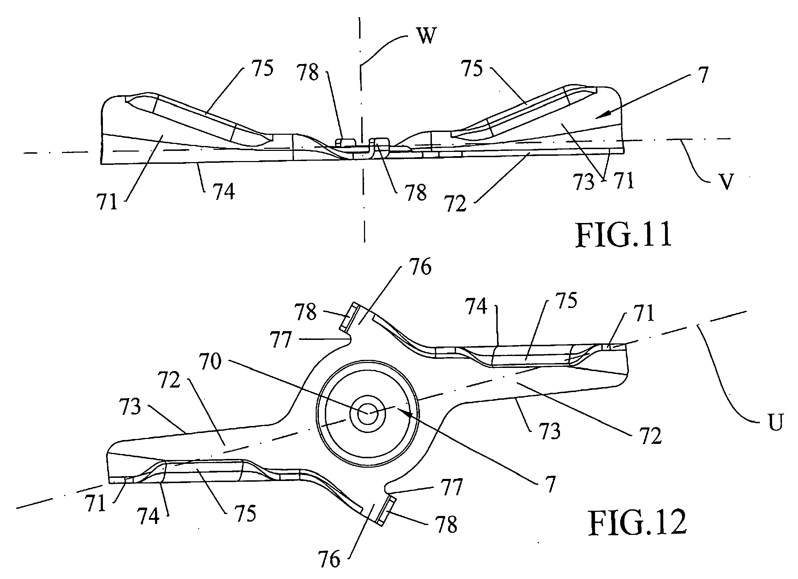

As shown in particular in Figures 11-12, the post-compression blade 7, at the hub 32, has a flat circular portion 70 which works as base and entirely covers the width of the blade 30 for its entire diameter.

Two flat lower strips 72 extend in two opposite directions extend from the circular portion 70, according to an axis U, the two flat lower strips 72 forming two opposite ends of the post-compression blade 7. Two flat balancing strips 76 which are diametrically opposite to the respective lower strips 72 extend again from the circular portion 70.

The post-compression blade 7 is sized so that the two lower strips 72 identify a diameter along the axis U which is slightly larger than the diameter of the flange 50 so as to cover the flange 50 in particular where the radial fins 61 are present during the rotation of the post-compressor blade 7.

All four strips 72 and 76 and the circular portion 70 lay on the same cutting plane V as the blade 30.

Two vertical portions 78 are provided on the ends of the balancing strips 76, which vertical portions remain in contact with the respective edges of the blade 30 on one side so as to counterbalance the torsion weights resulting from the rotation of the blade 30.

A curved seat 77 is provided near each edge of the balancing strip 76 facing the blade 30 to fit the blade 30 and the post-compression blade 7 more firmly in order to advantageously balance the torsion forces during rotation and the inertial forces during braking of the blade 30 when the motor 20 is stopped.

Each of said lower strips 72 of the post-compression blade 7 has a flat border 73 in direction of the rotary motion of the blade 30 and an opposite border 74 raised with a vertical wall 71.

As shown in Figures 10-12 said vertical wall 71 of the post-compression blade 7 is arranged in a space 86 between the blade 30 and the flange 50 so as to compress the air in a front zone 87 in front of the vertical wall 71 in direction of the motion of the blade 30 and at the same time decompress the air in a rear zone 88 behind the vertical wall 71. The air flow 80 which penetrates in the vents 56 of the space 86 is already at a pressure higher than atmospheric pressure because it crosses the narrowing of the vent 56 caused by the radial fins 61.

The post-compression blade 7 further compresses the air flow 80 in the space 86, because the rotating motion of the post-compression blade 7 compresses the air in the front zone 87 thus locally increasing pressure. In the rear zone 88, the post-compression blade 7 by decompressing the air allows to locally decrease the pressure and more rapidly attract air into the vents 56, thus increasing the speed and advantageously allowing a greater flow of air into the space 86.

Consequently, the post-compression blade 7, during its rotating motion locally creates strong variations of pressure allow the entire path of the air in the toroid 11. Locally, pressures much higher than those of the prior art may be provided in the front zones 87. Thus, the post-compression blade 7 advantageously allows to obtain much higher pressures, which allow to guarantee the drawing of the cut air into the bag much more efficiently and thus prevent the obstruction of the channels along the path.

The arrangement of the post-compression blade 7 along axis U, which forms an angle α smaller than 90°, and preferably about 30°, with respect to axis S of the blade 30, allows the post-compression blade 7 to follow the rotation of the blade 30. In this manner, the front zone 87 with a higher pressure, is arranged immediately after the cutting foil 31 of the blade 30 so as to oppose a strong propulsive thrust to the grass clippings such as to overcome the chaotic motions of the grass clippings and address it along the path of the toroid 11. The strong pressure exerted in the front zone 87 allows the air which is in front of the vertical wall 71 of the post-compression blade 7 to push the grass clippings making a minimum amount only strike against the vertical wall 71 itself. The fact that the grass clippings is pushed by the air without wearing the various rotating parts of the cutting blade 31 of the grass is extremely advantageous because it allows to greatly decrease the wear of all the other portions of the blade 30 and of the post-compression blade 7.

Furthermore, the post-compression blade 7 allows to reach much higher pressures thus solving the technical problem of vibrations, noise and lifting dust because the pressure variations are only local and change over time synchronized with the rotating motion of the post-compression blade 7. Angle α may be varied to further reduce vibrations and noise of the lawn mower 1.

Advantageously, the post-compression blade 7 further allows to compress even more the air flow 80 thus working as a real post-compression system after the introduction of air into the vents 56 of the flange 50, thus creating different pressure gradients which co-revolve in the space 86 in synchronous manner with the post-compression blade 7, and creating an air flow advantageously well directed in along the path of the toroid 11.

The upper portion of the vertical wall 71 further includes an upper strip 75 inclined with respect to the vertical identified by a vertical wall 71 itself so that the lower strip 72, the vertical wall 71 and the upper strip 75 form a C-shaped section as shown in Figure 10. Said C-shaped section of the post-compression blade 7 allows to channel the air flow 80 from the vents 56 of the flange 50 better without dispersion of the air neither downwards because the air is blocked by the lower strip 72 nor upwards because the air is blocked by the upper strip 75.

As shown in Figure 10, the upper strip 75 is inclined by an angle β with respect to the air flow 80 which penetrates through the vents 56. The angle β is chosen so as to make the air flow 80 reach a stalling condition with the upper strip 75, so that the air flow 80 remains in the space 86 without pushing the post-compression blade 7 out of its seat. Furthermore, said stalling condition caused by the inclination of the upper strip 75 with respect to the air flow 80 which penetrates from the vents 56 of the flange 50 prevents the post-compression blade from being pushed downwards and thus out of its seat by the forces caused by the air flow pressure gradients present in the space 86 when the post-compression blade 7 revolves. The angle β may be determined by first approximation by extending the line of the edge 58 of the radial fin 61 downwards to intercept the extension of the line of the upper strip 75 upwards.

Alternatively, a blade 30 free from peripheral fins 33 may be provided, as shown in Figures 7-10.

## Claims

1. A lawn mower (1) comprising a load-bearing body (10), a motor (20) supported by the load-bearing body (10), a vertical axis cutting blade (30) connected to the motor (20), a bag (40) for containing the grass clippings applied to the rear of the load-bearing body (10), a flange (50) and applied to the body (10) so as to separate a central chamber (13) from the cutting blade (30), **characterized in that** said flange (50) provides a conical circular wall (55), delimited on the periphery by a circular edge (52) and towards the center by a cylinder (53), said flange (50) is provided with a series of S-shaped radial fins (61) adapted to define a series of radial vents (56), said radial fins (61) and said radial vents (56) being equally distributed around a central rotation axis (W) of the cutting blade (30).

2. Lawn mower (1) according to claim 1, **characterized in that** each said S-shaped radial fin (61) provides a concave upward portion (611) connected by means of an inflection portion (612) to a upward convex portion (613), the convex portion (613) being placed in a position higher than the concave portion (611) and facing the sense opposite to the sense of rotation of the blade (30) so that the air moves from the central chamber (13) towards the cutting plane (V) of the blade (30).

3. Lawn mower (1) according to claim 1 or 2, **characterized in that** each said radial vent (56) is shaped as a rectangle (X, Y) laying on a radial plane intersecting the rotation axis (W) of the cutting blade (30).

4. Lawn mower (1) according to any one of the preceding claims, **characterized in that** the cutting blade (30) in intermediate position provides a pair of flaps (34) raising in the sense of rotation.

5. Lawn mower (1) according to claim 4, **characterized in that** said pair of flaps (34) is adapted to describe a circular portion, during the rotation of the cutting blade (30), which remains in correspondence with and under said radial fins (61) and thus under the radial vents (56).

6. Lawn mower (1) according to any one of the preceding claims, **characterized in that** said radial fins (61) and said radial vents (56) being equally distributed along said circular conical wall (55) around the central rotation axis (W) of the cutting blade (30).

7. Lawn mower (1) according to any one of the preceding claims, **characterized in that** it comprises a post-compression blade (7) of air flow (80) coming from the vents (56), two vertical walls (71) of the post-compression blade (7) are arranged in a space (86) between the cutting plane (V) and the flange (50), adapted to create pressure gradients of the air flow (80) during rotation.

8. Lawn mower (1) according to claim 7, **characterized in that** the post-compression blade (7) is mounted integrally to the cutting blade (30), said post-compression blade (7) comprising a circular portion (70) from which two flat lower strips (72) extend in two opposite directions according to an axis (U), the two flat lower strips (72) forming two opposite ends of the post-compression blade (7), each of said two flat lower strips (72) comprising a flat border (73) in direction of the rotary motion of the cutting blade (30) raised with one vertical wall (71) of said two vertical walls 71 and an opposite border (74) raised with one vertical wall (71) of said two vertical walls (71).

9. Lawn mower (1) according to claim 8, **characterized in that** the axis (U) of the post-compression blade (7) is inclined by an angle (α) with respect to an axis (S) in the direction of the length of the cutting blade (30), allowing the post-compression blade (7) to follow the rotation of the cutting blade (30), the post-compression blade (7) being sized to cover the flange (50) during rotation, in particular where the radial fins (61) are arranged.

10. Lawn mower (1) according to any one of the claims 7-9, **characterized in that** an upper portion of the vertical wall (71) of the post-compression blade (7) provides an upper strip (75) inclined with respect to the vertical identified by the vertical wall (71), said upper strip (75) inclined by an angle (β) with respect to the air flow (80) which penetrates from the vents (56) of the flange (50) is suitable for keeping the air flow (80) in the space (86).

11. Lawn mower (1) according to any one of the claims 8-10, **characterized in that** said post-compression blade (7) rotates about the same vertical rotation axis (W) of the cutting blade (30) and the circular portion (70) and the lower strips (72) of the post-compression blade (7) laying on the same cutting plane (V) of the cutting blade (30).

12. Lawn mower (1) according to any one of the claims 8-11, **characterized in that** the circular portion (70) of the post-compression blade (7) comprises two balancing strips (76) diametrically opposite to the lower strips (72), each comprising a vertical portion (78) and seats (77) suitable for fitting the cutting blade (30) more firmly thus balancing the torsion forces during rotation and the inertial forces during braking of the cutting blade (30).

## Patentansprüche

1. Rasenmäher (1), der einen lasttragenden Körper (10), einen durch den lasttragenden Körper (10) gestützten Motor (20), ein mit dem Motor (20) verbundenes Vertikalachsen-Schneidmesser (30), einen an dem hinteren Teil des lasttragenden Körpers (10) angesetzten Sack (40) zum Enthalten des Grasschnitts und einen Flansch (50), der an den Körper (10) angesetzt ist, um so eine zentrale Kammer (13) von dem Schneidmesser (30) zu trennen, aufweist,
**dadurch gekennzeichnet, dass** der Flansch (50) eine kreisrunde konische Wand (55) bereitstellt, die am Umfang durch eine kreisrunde Kante (52) und zu dem Zentrum hin durch einen Zylinder (53) begrenzt ist, wobei der Flansch (50) mit einer Reihe von S-förmigen radialen Rippen (61) versehen ist, die angepasst sind, eine Reihe von radialen Schlitzen (56) zu bestimmen, und die radialen Rippen (61) und die radialen Schlitze (56) um eine zentrale Rotationsachse (W) des Schneidmessers (30) herum gleichmäßig verteilt sind.

2. Rasenmäher (1) gemäß Anspruch 1, **dadurch gekennzeichnet, dass** jede der S-förmigen Rippen (61) einen ansteigenden konkaven Abschnitt (611) bereitstellt, der mittels eines gebogenen Abschnitts (612) mit einem ansteigenden konvexen Abschnitt verbunden ist, wobei der konvexe Abschnitt (613) in einer Position platziert ist, die höher als der konkave Abschnitt (611) ist und der Richtung entgegengesetzt zu der Rotationsrichtung der Schneidklinge (30) zugewandt ist, so dass sich die Luft von der zentralen Kammer (13) zu der Schneidebene (V) des Schneidmessers (30) hin bewegt.

3. Rasenmäher (1) gemäß Anspruch 1 oder 2, **dadurch gekennzeichnet, dass** jeder der radialen Schlitze (56) als ein Rechteck (X, Y) geformt ist, das in einer radialen Ebene liegt, die die Rotationsachse (W) des Schneidmessers (30) schneidet.

4. Rasenmäher (1) gemäß einem der vorangehenden Ansprüche, **dadurch gekennzeichnet, dass** das Schneidmesser (30) ein Paar von Flügeln (34), die sich in der Rotationsrichtung erhöhen, in einer Zwischenposition bereitstellt.

5. Rasenmäher (1) gemäß Anspruch 4, **dadurch gekennzeichnet, dass** das Paar von Flügeln (34) angepasst ist, während der Rotation des Schneidmessers (30) einen kreisrunden Abschnitt zu beschreiben, der in Entsprechung mit und unter den radialen Rippen (61), und somit unter den radialen Schlitzen (56), verbleibt.

6. Rasenmäher (1) gemäß einem der vorangehenden Ansprüche, **dadurch gekennzeichnet, dass** die radialen Rippen (61) und die radialen Schlitze (56) entlang der kreisrunden konischen Wand (55) gleichmäßig um die zentrale Rotationsachse (W) des Schneidmessers (30) herum verteilt sind.

7. Rasenmäher (1) gemäß einem der vorangehenden Ansprüche, **dadurch gekennzeichnet, dass** er eine Nachverdichtungsklinge (7) eines von den Schlitzen (56) kommenden Luftstroms (80) aufweist, wobei zwei vertikale Wände (71) der Nachverdichtungsklinge, die angepasst sind, während einer Rotation, einen Druckgradienten des Luftstroms (80) zu erzeugen, in einem Raum (86) zwischen der Schneidebene (V) und dem Flansch (50) angeordnet sind.

8. Rasenmäher (1) gemäß Anspruch 7, **dadurch gekennzeichnet, dass** die Nachverdichtungsklinge (7) integral an dem Schneidmesser angebracht ist, die Nachverdichtungsklinge (7) einen kreisrunden Abschnitt (70) aufweist, von dem sich zwei flache untere Streifen (72) entsprechend einer Achse (U) in zwei gegensätzliche Richtungen erstrecken, die zwei flachen unteren Streifen (72) zwei entgegengesetzte Enden der Nachverdichtungsklinge (7) bilden, jeder der zwei flachen unteren Streifen (72) in Richtung der Rotationsbewegung des Schneidmessers (30) einen flachen Rand (73) aufweist, der sich mit einer vertikalen Wand (71) der zwei vertikalen Wände (71) erhöht, und einen entgegengesetzten Rand (74), der sich mit einer vertikalen Wand (71) der zwei vertikalen Wände (71) erhöht.

9. Rasenmäher (1) gemäß Anspruch 8, **dadurch gekennzeichnet, dass** die Achse (U) der Nachverdichtungsklinge (7), bezüglich einer Achse (S), in der Richtung der Länge des Schneidmessers (30) um einen Winkel (α) geneigt ist, was es der Nachverdichtungsklinge (7) ermöglicht, der Rotation des Schneidmessers (30) zu folgen, wobei, insbesondere wo die radialen Rippen (61) angebracht sind, die Nachverdichtungsklinge (7) eine Größe aufweist, um den Flansch (50) während einer Rotation abzudecken.

10. Rasenmäher (1) gemäß einem der Ansprüche 7-9, **dadurch gekennzeichnet, dass** ein oberer Abschnitt der vertikalen Wand (71) der Nachverdichtungsklinge (7) einen oberen Streifen (75) bereitstellt, der bezüglich der durch die vertikale Wand (71) kenntlich gemachten Vertikalen geneigt ist, wobei der obere Streifen (75), der bezüglich des Luftstroms (80), der von den Schlitzen (56) des Flanschs (50) eindringt, um einen Winkel (β) geneigt ist, geeignet ist, den Luftstrom (80) in dem Raum (86) aufrecht zu erhalten.

11. Rasenmäher (1) gemäß einem der Ansprüche 8-10, **dadurch gekennzeichnet, dass** die Nachverdichtungsklinge (7) um dieselbe vertikale Rotationsachse (W) des Schneidmessers (30) rotiert, und der kreisrunde Abschnitt (70) und die unteren Streifen (72) der Nachverdichtungsklinge (7) in derselben Schneidebene (V) des Schneidmessers (30) liegen.

12. Rasenmäher (1) gemäß einem der Ansprüche 8-11, **dadurch gekennzeichnet, dass** der kreisrunde Abschnitt (70) der Nachverdichtungsklinge (7) zwei ausgleichende Streifen (76) diametral gegensätzlich zu den unteren Streifen (72) aufweist, wobei jeder einen vertikalen Abschnitt (78) und Sitze (77) aufweist, die geeignet sind, das Schneidmesser fester zu montieren, und somit die Torsionskräfte während einer Rotation und die Trägheitskräfte während eines Bremsens des Schneidmessers (30) auszugleichen.

## Revendications

1. Tondeuse (1) comprenant un corps porteur (10), un moteur (20) supporté par le corps porteur (10), une lame de coupe à axe vertical (30) raccordée au moteur (20), un sac (40) pour contenir l'herbe coupée, appliqué sur l'arrière du corps porteur (10), une bride (50) et appliquée sur le corps (10) afin de séparer une chambre centrale (13) de la lame de coupe (30), **caractérisée en ce que** ladite bride (50) fournit une paroi circulaire conique (55), délimitée sur la périphérie par un bord circulaire (52) et vers le centre par un cylindre (53), ladite bride (50) est prévue avec une série d'ailettes radiales en forme de S (61) adaptées pour définir une série d'évents radiaux (56), lesdites ailettes radiales (61) et lesdits évents radiaux (56) étant répartis à égale distance autour de l'axe de rotation central (W) de la lame de coupe (30).

2. Tondeuse (1) selon la revendication 1, **caractérisée en ce que** chacune desdites ailettes radiales en forme de S (61) fournit une partie ascendante concave (611) raccordée au moyen d'une partie d'inflexion (612) à une partie convexe ascendante (613), la partie convexe (613) étant placée dans une position plus haute que la partie concave (611) et faisant face au sens opposé au sens de rotation de la lame (30) de sorte que l'air se déplace à partir de la chambre centrale (13) vers le plan de coupe (V) de la lame (30).

3. Tondeuse (1) selon la revendication 1 ou 2, **caractérisée en ce que** chacun desdits évents radiaux (56) est formé comme un rectangle (X, Y) se trouvant sur un plan radial coupant l'axe de rotation (W) de la lame de coupe (30).

4. Tondeuse (1) selon l'une quelconque des revendications précédentes, **caractérisée en ce que** la lame de coupe (30), dans une position intermédiaire, fournit une paire de volets (34) se levant dans le sens de rotation.

5. Tondeuse (1) selon la revendication 4, **caractérisée en ce que** ladite paire de volets (34) est adaptée pour décrire une partie circulaire, pendant la rotation de la lame de coupe (30), qui reste en correspondance avec et sous lesdites ailettes radiales (61) et donc sous les évents radiaux (56).

6. Tondeuse (1) selon l'une quelconque des revendications précédentes, **caractérisée en ce que** lesdites ailettes radiales (61) et lesdits évents radiaux (56) sont répartis à égale distance le long de ladite paroi conique circulaire (55) autour de l'axe de rotation central (W) de la lame de coupe (30).

7. Tondeuse (1) selon l'une quelconque des revendications précédentes, **caractérisée en ce qu'**elle comprend une lame de post-compression (7) d'écoulement d'air (80) provenant des évents (56), deux parois verticales (71) de la lame de post-compression (7) sont agencées dans un espace (86) entre le plan de coupe (V) et la bride (50), adapté pour créer des gradients de pression de l'écoulement d'air (80) pendant la rotation.

8. Tondeuse (1) selon la revendication 7, **caractérisée en ce que** la lame de post-compression (7) est montée de manière solidaire sur la lame de coupe (30), ladite lame de post-compression (7) comprenant une partie circulaire (70) à partir de laquelle deux bandes inférieures plates (72) s'étendent dans deux directions opposées selon un axe (U), les deux bandes inférieures plates (72) formant deux extrémités opposées de la lame de post-compression (7), chacune desdites deux bandes inférieures plates (72) comprenant une bordure plate (73) dans la direction du mouvement rotatif de la lame de coupe (30) levée avec une paroi verticale (71) desdites deux parois verticales (71) et une bordure opposée (74) relevée avec une paroi verticale (71) desdites deux parois verticales (71).

9. Tondeuse (1) selon la revendication 8, **caractérisée en ce que** l'axe (U) de la lame de post-compression (7) est incliné selon un angle (α) par rapport à un axe (S) dans le sens de la longueur de la lame de coupe (30), permettant à la lame de post-compression (7) de suivre la rotation de la lame de coupe (30), la lame de post-compression (7) étant dimensionnée pour recouvrir la bride (50) pendant la rotation, en particulier à l'endroit où les ailettes radiales (61) sont agencées.

10. Tondeuse (1) selon l'une quelconque des revendications 7 à 9, **caractérisée en ce qu'**une partie supérieure de la paroi verticale (71) de la lame de post-compression (7) fournit une bande supérieure (75) inclinée par rapport à la verticale identifiée par la paroi verticale (71), ladite bande supérieure (75) inclinée selon un angle (β) par rapport à l'écoulement d'air (80) qui pénètre par des évents (56) de la bride (50), est appropriée pour maintenir l'écoulement d'air (80) dans l'espace (86).

11. Tondeuse (1) selon l'une quelconque des revendications 8 à 10, **caractérisée en ce que** ladite lame de post-compression (7) tourne autour du même axe de rotation vertical (W) de la lame de coupe (30) et la partie circulaire (70) et les bandes inférieures (72) de la lame de post-compression (7) se trouvant sur le même plan de coupe (V) de la lame de coupe (30).

12. Tondeuse (1) selon l'une quelconque des revendications 8 à 11, **caractérisée en ce que** la partie circulaire (70) de la lame de post-compression (7) comprend deux bandes d'équilibrage (76) diamétralement opposées aux bandes inférieures (72), comprenant chacune une partie verticale (78) et des sièges (77) appropriés pour monter la lame de coupe (30) plus fermement, équilibrant ainsi les forces de torsion pendant la rotation et les forces d'inertie pendant le freinage de la lame de coupe (30).
